(19) Europäisches Patentamt
European Patent Office
Office européen des brevets

(11) **EP 1 865 518 A2**

(12) **EUROPEAN PATENT APPLICATION**

(43) Date of publication:
**12.12.2007 Bulletin 2007/50**

(51) Int Cl.:
*H01F 41/12* (2006.01)       *H01F 5/06* (2006.01)

(21) Application number: **07109887.5**

(22) Date of filing: **08.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **09.06.2006 US 449752**

(71) Applicant: **General Electric Company
Schenectady, NY 12345 (US)**

(72) Inventors:
• **Farquhar, Donald S.
Niskayuna, NY 12309 (US)**

• **Foley, Peter John
Scotia, NY 12302 (US)**
• **Irwin, Patricia Chapman
Altamont, NY 12009 (US)**
• **Wang, Hsin-Pang
Rexford, NY 12148 (US)**

(74) Representative: **Illingworth-Law, William Illingworth
GE International Inc.
London Patent Operation
15 John Adam Street
London WC2N 6LU (GB)**

(54) **Joule heating apparatus for curing powder coated generator rotor coils**

(57) A method of curing a coating on a metal conductor (14) comprising: (a) connecting the metal conductor in series with a power transformer (12); and (b) passing a current through the metal conductor so as to achieve a temperature sufficient to cure the coating.

Fig. 2

**Description**

BACKGROUND OF THE INVENTION

This invention relates to the manufacture of generator electromagnetic rotors, and specifically, to curing powder-coated generator coils by means of joule heating.

Electrostatic deposition of epoxy powders is an alternative to existing taping techniques used for insulating rotor coils in generators. Various commercial thermosetting materials are available for powder coating, and all require curing at elevated temperatures in the range of 120C to 200C. These materials have been shown to have suitable mechanical and electrical properties for use as insulation, and various alternate heating methods for curing the coatings have been proposed.

Convection, induction, radiation and Joule heating have found application in various other industrial processes, and are sometimes used in combination with each other. Many factors must be considered, however, in selecting a system that can achieve a uniform and repeatable curing profile for a specific application.

Field coils for electromagnetic rotors that comprise multiple windings substantially entirely coated with a powder resin are disclosed in commonly owned U.S. Patent No. 6,686,822. The powder coating is typically applied by means of electrostatic deposition of a dielectric insulating material onto the generator coils as an alternative to more costly and conventional techniques such as the manual application of insulating materials via manual tape winding. While powder coating has been advantageous as a replacement insulation, the drawback has been the curing process following deposition. Typically, the coated coils are transferred to a commercial convection oven that may be as long as thirty feet. As might be expected, such ovens are not easily transported and are expensive to build and maintain.

Accordingly, there remains a need for a simplified, less costly, but effective curing means for large powder-coated components such as copper alloy generator coils.

BRIEF DESCRIPTION OF THE INVENTION

The present invention relates to a method and apparatus suitable for curing a powder-coated metal bar by means of Joule (also known as resistance) heating. As already indicated, the metal bar may be a copper alloy generator coil and the coating may be an electrostatically applied epoxy or blended powder coating. The invention here enables low cost curing of the powder coat insulating materials by avoiding the high capital cost of a convection oven. More specifically, the apparatus employs a power transformer in a special configuration where the workpiece (for example, the rotor generator coil) is configured in a series loop to form a single turn secondary winding of the power transformer. The primary winding of the power transformer is energized with AC current (preferably 50 or 60 hz due to standards of line voltage supplies), and creates a magnetic field in the transformer core. The secondary winding is formed as at least one winding around the core. Two or more rotor generator coils are electrically connected in a series loop by a clamping device in the configuration such that resulting ends of the loop can then be electrically connected to each end of the power transformer secondary winding. The connection may be made by means of a clamping device. The magnetic field thus creates an electric field in the secondary winding, and a resulting current is created in the series loop formed by the rotor generator coils. The temperature of the rotor coil(s) is monitored while the power transformer primary coil is energized and used as part of a feedback loop to regulate the temperature.

Accordingly, in one aspect, the present invention relates to a method of curing a coating on a metal conductor comprising: (a) connecting the metal conductor to the output of a power transformer; and (b) passing a current through the metal conductor so as to achieve a surface temperature sufficient to cure the coating.

In another aspect, the present invention relates to a method of curing a powder coating on at least a pair of coils of a generator rotor comprising: (a) configuring a step-down transformer to include a primary winding with plural windings around a core, and a secondary winding with at least one winding around the core, but fewer than the primary winding; (b) connecting two or more generator coils in a series loop and electrically connecting the ends of the loop to the secondary winding via a connecting element having the same resistance and heat loss as the generator coils; (c) using the transformer to produce a current through said one or more coils to thereby heat the one or more coils to a desired curing temperature.

The invention will now be described in detail in connection with the drawing identified below.

BRIEF DESCRIPTION OF THE DRAWING

Embodiments of the present invention will now be described, by way of example only, with reference to the accompanying drawings, in which:

Figure 1 illustrates part of a coil with labels indicating symbols representing variables in the basic equations for heat gain and loss during Joule heating; and

Figure 2 is a schematic diagram of a Joule heating apparatus in accordance with an exemplary embodiment of the invention.

DETAILED DESCRIPTION OF THE INVENTION

Joule or resistance heating is achieved by the dissipation associated with internal resistance and the corresponding voltage drop when a DC or AC current flows through the workpiece. This phenomena is well understood, and of course is the basis for many types of electrical heating elements. For application to a rotor coil, consideration must be given to the materials and construction and resulting extremely low resistance of the workpiece, and the resulting large current that is likely to be required. The amount of current will depend on the heat capacity of the workpiece and heat loss due to convection and radiation from the workpiece, and the required curing temperature. For a particular embodiment of interest, with an overall coil length of about 30 feet and a cross section of approximately 1 inch by ¼ inch, initial evaluations indicated that heat loads are on the order of 3000W per coil in the steady state heating condition, and that a corresponding current on the order of 800 amps would be required. This is the basic information that is required to design a transformer suitable for this application. A critical aspect of the system is to make good electrical contact between the coils and the transformer. Further, the secondary winding of the transformer must be kept within acceptable temperature limits.

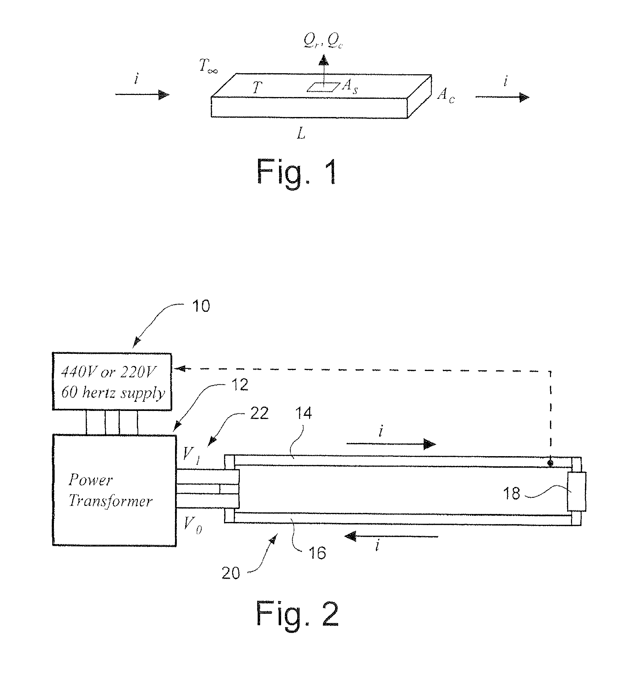

In connection with Figure 1, the equations for heat gain and loss during Joule heating of an object are set forth below. The source of heating is Joule heating $Q_j$, and the heating load comprises losses from convection $Q_c$ and radiation $Q_r$ from the surface and heat storage $Q_s$ associated with the heat capacity of the workpiece. The heat capacity can be readily calculated, but the convection and radiation loads are strongly dependent on geometry and materials properties. In this case, with a reactive exothermic thermosetting material on the surface of the workpiece, it is critical to verify experimentally the heat loss. The following four equations show the dependence of each component of heat loss or gain. Current is denoted as i, R denotes resistance, h denotes the heat transfer coefficient, $A_s$ is the cross-sectional area, $vol$ is the volume, $T_\infty$ is the surrounding temperature, T is the part temperature, $\rho_m$ is the mass density, $C_p$ is the heat capacity, and σ is Boltzmann's constant.

Joule Heating :

$$Q_j = i^2 R$$

Convection :

$$Q_c = hA_s\,(T_\infty)$$

Radiation :

$$Q_r = \sigma A_s (T^4 - T_\infty^4)$$

Storage :

$$Q_s = \text{vol} \cdot \rho_m c_p (T - T_\infty)$$

Joule Heating :

$$Q_j = i^2 R$$

Convection :

$$Q_c = hA_s\,(T_\infty)$$

Radiation :

$$Q_r = \sigma A_s (T^4 - T_\infty^4)$$

Storage :

$$Q_s = \text{vol} \cdot \rho_m c_p (T - T_\infty)$$

The resistance is a critical factor in calculating the Joule heating. The nominal resistance $R_0$ depends on geometry and material properties where $L$ is length, $A_s$ is cross-sectional area and $\rho_R$ is the resistivity at nominal temperature $T_0$.

The actual resistance $R_0$ varies with temperature $T$ with proportionality α which is the thermal coefficient of expansion. Power $P$ depends on the resistance $R$ and the current i as follows:

$$R_0 = \rho_R \frac{L}{A_s} \qquad R = R_0\,(1 + \alpha(T - T_0))$$

$$P = Vi = i^2 R = V^2/R$$

An approximation of the values for temperature coefficient of resistance can be used by assuming the values for pure copper, whereas in fact the coils are made using a copper alloy containing a small amount of silver. The other relevant constants used in the subsequent calculations are tabulated below:

$$\alpha = 0.004 \ C^{-1}$$

$$\rho_R = 0.67 \ \mu\Omega - cm$$

$$c_p = 0.39 \ J/gm\text{-}C$$

$$\rho_m = 8.9 \ gm/cm^3$$

$$T_\infty = T_0 = 20C$$

Using the relationships expressed above, one can determine the resistance in a winding of a given size and configuration, and also determine the voltage necessary to produce a current that will raise the temperature of the winding sufficiently to cure the powder coating.

With reference now to Figure 2, a voltage source 10 is used to supply power to a power transformer 12. The source 10 may provide, for example, 440V or 220V to the transformer. First and second powder-coated coil elements 14, 16 of a generator rotor coil are connected in series via a clamping device 18 that forms part of the single-turn secondary winding 20 about the core of the transformer 12 via coupling 22. The rest of the secondary winding that extends from coupling 22 and around the core (not shown) is a permanent part of the power transformer. In order to provide best temperature uniformity, the secondary winding extending about the transformer core can be designed to have the same heat loss and resistance per unit length as the rotor coil itself, so that no temperature differential along the length of the secondary coil occurs. The power transformer is a high-current transformer that reduces voltage to produce high current in the powder-coated elements 14, 16. As indicated above, the elements 14, 16 are copper-alloy generator coils with an electrostatically-applied epoxy or blended epoxy powder coating.

The primary winding (not shown) of the transformer 12 is energized with AC current (preferably 50 or 60 Hz), creating a magnetic field in the transformer core (also not shown). The magnetic field creates an electric field in the secondary winding 20, and a resulting current i is generated in the series loop formed by the rotor coils. The predetermined required current is sufficient to heat the coil elements 14, 16 to the temperature necessary to cure the powder coating, for example, 150C.

Preferably, the temperature of the rotor coil elements 14, 16 is monitored while the primary coil is energized, and used as an input to an otherwise conventional proportional-integral-derivative feedback control loop for continual regulation of the temperature. Thus, the temperature can be measured directly and the voltage adjusted as necessary to vary the current to produce the desired temperature. Alternatively, the temperature can be inferred from the voltage and current characteristics, since resistance in the coil elements is temperature dependant.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

**Claims**

1. A method of curing a coating on a metal conductor (14) comprising:

   (a) connecting the metal conductor in series with a power transformer (12); and
   (b) passing a current through the metal conductor (14) so as to achieve a temperature sufficient to cure the coating.

2. The method of claim 1 wherein the metal conductor comprises one or more generator coils (14, 16).

3. The method of claim 1 further comprising:

   (c) establishing a feedback loop to adjust the temperature of the metal conductor (14) by varying the voltage input to the transformer (12) based on actual temperature of the metal conductor.

4. The method of claim 1 wherein the power transformer (12) is a step-down transformer.

5. The method of claim 1 wherein in step (a), the metal conductor (14) is series connected with a secondary winding (20) of the power transformer.

6. The method of claim 2 wherein in step (a), a pair of coils (14, 16) are connected in series.

7. The method of claim 5 wherein said conductor (14) and said secondary winding (20) have the same heat loss and resistance per unit length as the metal conductor.

**8.** A method of curing a powder coating on at least a pair of coils (14, 16) of a generator rotor comprising:

(a) configuring a step-down transformer (12) to include a primary winding with plural windings around a core, and a secondary winding (20) with at least one winding around the core, but fewer than said primary winding;
(b) connecting two or more generator coils (14, 16) in a series loop and electrically connecting the ends of the loop to the secondary winding (20) via a connecting element (22) having the same resistance and heat loss as the generator coils.
(c) using the transformer (12) to produce a current through said one or more coils to thereby heat said one or more coils to a desired curing temperature.

**9.** The method of claim 8, further comprising:

(a) monitoring the temperature of the one or more coils (14, 16) and varying a voltage input to the power transformer (12) to adjust the current as necessary to achieve the desired curing temperature.

**10.** The method of claim 9 wherein the voltage input is initially 440V.

Fig. 1

Fig. 2

**EP 1 865 518 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6686822 B